# EUROPEAN PATENT APPLICATION

(11) **EP 4 693 594 A1**
(43) Date of publication of application: **11.02.2026**
(21) Application number: 24781330.6
(22) Date of filing: 29.03.2024
(51) Int. Cl.: H01M 10/42, G01M 3/16, H01M 50/105

(54) **BATTERY CELL CAPABLE OF DETECTING ELECTROLYTE LEAKAGE**

(30) Priority: 30.03.2023 KR 20230042049
(71) Applicant: LG Energy Solution, Ltd., Seoul 07335 (KR)
(72) Inventor: UHM, Jae Yong, Daejeon 34122 (KR)
(74) Representative: Plasseraud IP
(86) International application number: PCT/KR2024/004120
(87) International publication number: WO 2024/205340

(57) **Abstract**

The present invention provides a battery cell capable of detecting electrolyte leakage, including: an electrode assembly; an electrolyte; a case 100 comprising a receptor 110 accommodating the electrode assembly and the electrolyte, and a sealing portion 120 provided at an edge of the receptor 110 and sealing the receptor 110 with the electrode assembly and the electrolyte accommodated therein; and a leakage sensor 200 coupled to and installed at the sealing portion 120 to detect the electrolyte leaking from the case 100. The leakage sensor 200 includes a conductor 220 constituting an electric circuit, at least a portion of the conductor 220 provided adjacent to and extending along an edge of the sealing portion 120. At least one of resistance, current and voltage of the electric circuit changes when leaked electrolyte contacts the conductor 220. Accordingly, a battery cell capable of detecting electrolyte leakage may be easily implemented at low cost with a simple configuration, and by detecting electrolyte leakage in real time quickly and accurately, accidents such as fire may be prevented in advance, and additional space for installing a leakage sensor may not be necessary.

## Description

### [TECHNICAL FIELD]

This application claims the benefit of priority based on Korean Patent Application No. 10-2023-0042049 filed on March 30, 2023, entire content disclosed in the document of the patent applications is included as a part of this specification.

The present invention relates to a battery cell capable of detecting electrolyte leakage, which may be easily implemented at low cost with a simple configuration, and which may detect electrolyte leakage quickly and accurately in real time to prevent accidents such as fires in advance, and which does not require additional space for installing a leakage sensor.

### [BACKGROUND ART]

Secondary batteries may be classified into cylindrical battery cells, rectangular battery cells and pouch-type battery cells. Among these, pouch-type battery cells, which may be stacked with high integration, have high energy density per weight, are inexpensive, and are easy to modify, are attracting much attention.

In the pouch-type battery cell, a sealing portion is formed along the edge of the pouch, and an electrode laminate is embedded in an inner accommodating space. In addition, electrode tabs (electrode leads) protrude from the pouch, and such electrode tabs are electrically connected to the electrode laminate. The pouch functions to insulate the electrode laminate from the outside.

The inner accommodating space of the pouch in which the electrode laminate is embedded is filled with electrolyte. When the electrolyte filled in the pouch leaks, problems such as poor insulation may occur, which may cause a fire. In addition, when the electrolyte leaks in the secondary batteries for vehicles, a serious error may occur in the vehicle control system due to a voltage drop.

Therefore, a battery cell capable of detecting electrolyte leakage quickly and accurately in real time to prevent accidents such as fires is necessary.

### [PRIOR ART LITERATURE]

### [PATENT DOCUMENT]

(Patent Document 0001) Korean Patent No. 10-2173066

### [DISCLOSURE]

### [TECHNICAL PROBLEM]

In order to solve the above-described problems, it is an object of the present invention to provide a battery cell capable of detecting electrolyte leakage that may be easily implemented at low cost with a simple configuration.

It is an object of the present invention to provide a battery cell capable of detecting electrolyte leakage in real time.

It is an object of the present invention to provide a battery cell capable of detecting electrolyte leakage quickly, accurately, reliably and effectively and preventing accidents such as fire in advance.

It is an object of the present invention to provide a battery cell capable of detecting electrolyte leakage without additional space for installing a leakage sensor.

It is an object of the present invention to provide a battery cell capable of detecting electrolyte leakage with improved performance or sensitivity.

It is an object of the present invention to provide a battery cell capable of detecting electrolyte leakage for preventing short circuits in electric circuits and damage to parts connected to external objects.

It is an object of the present invention to provide a battery cell capable of detecting electrolyte leakage that may establish and maintain connection to an external object (e.g., external power) easily and stably.

It is an object of the present invention to provide a battery cell capable of detecting electrolyte leakage having light weight and allowing easy installation.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a battery cell capable of detecting electrolyte leakage, including: an electrode assembly; an electrolyte; a case 100; and a leakage sensor 200.

The case 100 may include a receptor 110, and a sealing portion 120.

The receptor 110 may accommodate the electrode assembly and the electrolyte.

The sealing portion 120 may be provided at an edge of the case 100 and seal the receptor 110 with the electrode assembly and the electrolyte accommodated therein.

The leakage sensor 200 may be coupled to and installed at the sealing portion 120.

The leakage sensor 200 may detect the electrolyte leaking from the case 100.

The leakage sensor 200 may include a conductor 220.

At least a portion of the conductor 220 may be provided adjacent to an edge of the sealing portion 120.

The conductor 220 may extend along the edge of the sealing portion 120.

The conductor 220 may constitute an electric circuit.

At least one of resistance, current and voltage of the electric circuit may change when leaked electrolyte contacts the conductor 220.

In one embodiment, the conductor 220 may include a first conductor C1 and a second conductor C2.

The first conductor C1 may be provided adjacent to the edge of the sealing portion 120.

The first conductor C1 may extend along the edge of the sealing portion 120.

The second conductor C2 may be provided inner than the first conductor C1 on the sealing portion 120.

The second conductor C2 may extend parallel to the first conductor C1 with a predetermined distance therebetween.

The first conductor C1 and the second conductor C2 may constitute the electric circuit.

At least one of the resistance, the current and the voltage of the electric circuit may change when the leaked electrolyte is simultaneously in contact with the first conductor C1 and the second conductor C2 to electrically connect the first conductor C1 and the second conductor C2.

In one embodiment, the conductor 220 further may include a third conductor C3.

The third conductor C3 may be provided inner than the second conductor C2 on the sealing portion 120.

The third conductor C3 may extend parallel to the second conductor C2 with a predetermined distance therebetween.

The third conductor C3 may constitute the electric circuit.

At least one of the resistance, the current and the voltage of the electric circuit may change when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3.

In one embodiment, the first conductor C1 and the third conductor C3 may be connected to each other.

In one embodiment, the conductor 220 may further include a fourth conductor C4.

The fourth conductor C4 may be provided inner than the third conductor C3 on the sealing portion 120.

The fourth conductor C4 may extend parallel to the third conductor C3 with a predetermined distance therebetween.

The fourth conductor C4 may constitute the electric circuit.

At least one of the resistance, the current and the voltage of the electric circuit may change when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3; or simultaneously in contact with the third conductor C3 and the fourth conductor C4 to electrically connect the third conductor C3 and the fourth conductor C4.

In one embodiment, the first conductor C1 and the third conductor C3 may be connected to each other.

The second conductor C2 and the fourth conductor C4 may be connected to each other.

In one embodiment, the receptor 110 may extend in a vertical direction and a first direction intersecting the vertical direction.

The sealing portion 120 may include a first sealing portion 122.

The first sealing portion 122 may be provided at a one side in the first direction of the receptor 110.

The first sealing portion 122 may extend in the vertical direction,

The first sealing portion 122 may have a predetermined width in the first direction.

The leakage sensor 200 is coupled to and installed at the first sealing portion 122.

The conductor 220 may include a one side conductor 222.

The one side conductor 222 may be provided adjacent to a one side edge in the first direction of the first sealing portion 122.

The one side conductor 222 may extend in the vertical direction along the one side edge, or extend obliquely leaning toward a direction perpendicular to the vertical direction along the one side edge.

The one side conductor 222 may constitute the electric circuit.

At least one of the resistance, the current and the voltage of the electric circuit may change when the leaked electrolyte contacts the one side conductor 222,
In one embodiment, the conductor 220 may include a lower side conductor 224.

The lower side conductor 224 may be provided adjacent to a lower side edge of the first sealing portion 122.

The lower side conductor 224 may extend in the first direction along the lower side edge, or extend obliquely leaning toward a direction perpendicular to the first direction along the lower side edge.

The lower side conductor 224 may constitute the electric circuit,

At least one of the resistance, the current and the voltage of the electric circuit may change when the leaked electrolyte contacts the lower side conductor 224.

In one embodiment, the lower side conductor 224 may extend to a position corresponding to an opposite side end portion in the first direction of the first sealing portion 122.

In one embodiment, the one side conductor 222 and the lower side conductor 224 may be connected to each other.

In one embodiment, the conductor 220 may further include an opposite side conductor 226.

The opposite side conductor 226 may be provided at an opposite side in the first direction of the one side conductor 222.

The opposite side conductor 226 may extend in the vertical direction or extending obliquely leaning toward a direction perpendicular to the vertical direction.

The opposite side conductor 226 may constitute the electric circuit.

At least one of the resistance, current and the voltage of the electric circuit may change when the leaked electrolyte contacts the opposite side conductor 226.

In one embodiment, the one side conductor 222 and the opposite side conductor 226 may be connected to the lower side conductor 224.

In one embodiment, the conductor 220 may further include a terminal 228.

The terminal 228 may be connected to an external object constituting the electric circuit.

The terminal 228 may be connected to the one side conductor 222.

The terminal 228 may be provided at an upper side portion of the leakage sensor 200.

In one embodiment, the terminal 228 is provided above the one side conductor 222.

In one embodiment, the battery cell capable of detecting electrolyte leakage may further include a first electrode lead 310.

The first electrode lead 310 may be accommodated in the receptor 110.

The first electrode lead 310 may be disposed at a one side in a first direction of the electrode assembly extending in the first direction.

The first electrode lead 310 may be connected to the electrode assembly.

The sealing portion 120 may include a first sealing portion 122.

The first sealing portion 122 may be provided at the one side in the first direction of the electrode assembly and the receptor 110.

The first sealing portion 122 may surround the first electrode lead 310,

The leakage sensor 200 may be coupled to and installed at the first sealing portion 122,

The conductor 220 may include a one side conductor 222.

The one side conductor 222 may be provided adjacent to a one side edge in the first direction of the first sealing portion 122.

The one side conductor 222 may extend along the one side edge of the first sealing portion 122.

The one side conductor 222 may constitute the electric circuit.

At least one of the resistance, current and the voltage of the electric circuit may change when the leaked electrolyte contacts the one side conductor 222.

In one embodiment, the leakage sensor 200 may further include a flexible printed circuit board 210.

The flexible printed circuit board 210 may be coupled to and installed at the sealing portion 120.

The conductor 220 may be a circuit pattern formed on the flexible printed circuit board 210.

In one embodiment, the leakage sensor 200 may include a first leakage sensor 200A and a second leakage sensor 200B.

The first leakage sensor 200A may be coupled to and installed on a one side surface of the first sealing portion 122 in a second direction intersecting the vertical direction and the first direction.

The second leakage sensor 200B coupled to and installed on an opposite side surface of the first sealing portion 122 in the second direction.

In addition, in order to solve above-described problems, the present invention provides a battery cell capable of detecting electrolyte leakage, including: an electrode assembly; an electrolyte; a case 100; and a leakage sensor 200.

The case 100 may accommodate the electrode assembly and the electrolyte and sealed with the electrode assembly and the electrolyte accommodated therein.

The leakage sensor 200 may be coupled to and installed at the case 100.

The leakage sensor 200 may detect the electrolyte leaking from the case 100.

The case 100 may extend in vertical direction and first direction intersecting the vertical direction.

The leakage sensor 200 may include a conductor 220.

The conductor 220 may extend in the vertical direction or extend obliquely leaning toward a direction perpendicular to the vertical direction.

The conductor 220 may constitute an electric circuit.

At least one of resistance, current and voltage of the electric circuit may change when leaked electrolyte contacts the conductor 220.

In one embodiment, the conductor 220 may include a first conductor C1 and a second conductor C2.

The first conductor C1 may extend in the vertical direction or extend obliquely leaning toward a direction perpendicular to the vertical direction.

The second conductor C2 may extend parallel to the first conductor C1 with a predetermined distance therebetween.

The first conductor C1 and the second conductor C2 may constitute the electric circuit.

At least one of the resistance, the current and the voltage of the electric circuit may change when the leaked electrolyte is simultaneously in contact with the first conductor C1 and the second conductor C2 to electrically connect the first conductor C1 and the second conductor C2.

In one embodiment, the leakage sensor 200 may include a first leakage sensor 200A and a second leakage sensor 200B.

The first leakage sensor 200A may be coupled to and installed on first end surface of the case 100 in a second direction intersecting the vertical direction and the first direction.

The second leakage sensor 200B may be coupled to and installed on second end surface of the case 100 in the second direction.

In addition, in order to solve above-described problems, the present invention provides a battery module 1, including: a plurality of battery cells capable of detecting the electrolyte leakage; and an ICB (Internal Connection Board) module 20 electrically connected to a conductor 220 of a leakage sensor 200 of each of the plurality of battery cells capable of detecting the electrolyte leakage.

### [ADVANTAGEOUS EFFECTS]

According to an embodiment of the present invention, a battery cell capable of detecting electrolyte leakage may include: an electrode assembly; an electrolyte; a case 100 including a receptor 110 accommodating the electrode assembly and the electrolyte, and a sealing portion 120 provided at an edge of the receptor 110 and sealing the receptor 110 with the electrode assembly and the electrolyte accommodated therein; and a leakage sensor 200 coupled to and installed at the sealing portion 120 to detect the electrolyte leaking from the case 100. The leakage sensor 200 may include a conductor 220 constituting an electric circuit, wherein at least a portion of the conductor 220 provided adjacent to an edge of the sealing portion 120 and extending along the edge thereof. At least one of resistance, current and voltage of the electric circuit may change when leaked electrolyte contacts the conductor 220.

Accordingly, the embodiment of the leakage sensor 200 may be facilitated at low cost with a simple configuration. In addition, electrolyte leakage may be detected in real time.

In addition, since the electrolyte mainly leaks through the edge of the sealing portion 120, and the conductor 220 of the leakage sensor 200 is provided adjacent to the edge of the sealing portion 120 and extends along the edge of the sealing portion 120, the leakage sensor 200 may quickly and accurately detect electrolyte leakage. Accordingly, accidents such as fire may be prevented in advance.

In addition, since the leakage sensor 200 is coupled to and installed at the sealing portion 120 with extra empty space therearound by being smaller than the receptor 110, additional space for installing the leakage sensor 200 may be unnecessary.

According to an embodiment of the present invention, the conductor 220 may include: a first conductor C1 provided adjacent to the edge of the sealing portion 120 and extending along the edge thereof; and a second conductor C2 provided inner than the first conductor C1 on the sealing portion 120 and extending parallel to the first conductor C1 with a predetermined distance therebetween. The first conductor C1 and the second conductor C2 constituting the electric circuit. At least one of the resistance, the current and the voltage of the electric circuit may change when the leaked electrolyte is simultaneously in contact with the first conductor C1 and the second conductor C2 to electrically connect the first conductor C1 and the second conductor C2.

Accordingly, the embodiment of the leakage sensor 200 may be facilitated at low cost with a simple configuration.

According to an embodiment of the present invention, the conductor 220 may further include a third conductor C3 provided inner than the second conductor C2 on the sealing portion 120 and extending parallel to the second conductor C2 with a predetermined distance therebetween, the third conductor C3 constituting the electric circuit. At least one of the resistance, the current and the voltage of the electric circuit may change when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3.

Accordingly, the leakage sensor 200 may increase the leakage detection area or the leakage detection width, or the separation distance between the first conductor C1 and the second conductor C2 or the second conductor C2 and the third conductor C3 may be reduced such that the performance or sensitivity of the leakage sensor 200 may be improved.

According to an embodiment of the present invention, the first conductor C1 and the third conductor C3 may be connected to each other.

Accordingly, the embodiment of the leakage sensor 200 capable of detecting: the electrolyte passing through the first conductor C1 and the second conductor C2; and the electrolyte passing through the second conductor C2 and the third conductor C3 may be facilitated at low cost with a simple configuration.

According to an embodiment of the present invention, the conductor 220 may further include a fourth conductor C4 provided inner than the third conductor C3 on the sealing portion 120 and extending parallel to the third conductor C3 with a predetermined distance therebetween, the fourth conductor C4 constituting the electric circuit. At least one of the resistance, the current and the voltage of the electric circuit may change when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3; or simultaneously in contact with the third conductor C3 and the fourth conductor C4 to electrically connect the third conductor C3 and the fourth conductor C4.

Accordingly, the leakage sensor 200 may increase the leakage detection area or the leakage detection width, or the separation distance between the first conductor C1 and the second conductor C2, the second conductor C2 and the third conductor C3 or the third conductor C3 and the fourth conductor C4 may be reduced such that the performance or sensitivity of the leakage sensor 200 may be improved.

According to an embodiment of the present invention, the first conductor C1 and the third conductor C3 may be connected to each other. The second conductor C2 and the fourth conductor C4 may be connected to each other.

Accordingly, the embodiment of the leakage sensor 200 capable of detecting: the electrolytes passing through the first conductor C1 and the second conductor C2; the electrolytes passing through the second conductor C2 and the third conductor C3; and the electrolytes passing through the third conductor C3 and the fourth conductor C4 may be facilitated at low cost with a simple configuration.

According to an embodiment of the present invention, the receptor 110 may extend in a vertical direction and a first direction intersecting the vertical direction. The sealing portion 120 may include a first sealing portion 122 having a predetermined width in the first direction, the first sealing portion 122 provided at a one side in the first direction of the receptor 110 and extending in the vertical direction, The leakage sensor 200 is coupled to and installed at the first sealing portion 122, The conductor 220 may include a one side conductor 222 constituting the electric circuit, the one side conductor 222 provided adjacent to a one side edge in the first direction of the first sealing portion 122 and extending in the vertical direction along the one side edge, or extending obliquely leaning toward a direction perpendicular to the vertical direction along the one side edge. At least one of the resistance, the current and the voltage of the electric circuit may change when the leaked electrolyte contacts the one side conductor 222.

Accordingly, for the electrolyte that leaks through the one side edge in the first direction of the first sealing portion 122 and then forms droplets or flows downward, the probability of contact with the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

According to an embodiment of the present invention, the conductor 220 may include a lower side conductor 224 constituting the electric circuit, the lower side conductor 224 provided adjacent to a lower side edge of the first sealing portion 122 and extending in the first direction along the lower side edge, or extending obliquely leaning toward a direction perpendicular to the first direction along the lower side edge. At least one of the resistance, the current and the voltage of the electric circuit may change when the leaked electrolyte contacts the lower side conductor 224.

Accordingly, for the electrolyte that leaks through the edge of the first sealing portion 122 and then flows downward or, forms droplets or accumulates at the lower side, the probability of contact with the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

According to an embodiment of the present invention, the lower side conductor 224 may extend to a position corresponding to an opposite side end portion in the first direction of the first sealing portion 122.

Accordingly, since the leakage detection area of the leakage sensor 200 may be increased, the performance or sensitivity of the leakage sensor 200 may be improved.

According to an embodiment of the present invention, the one side conductor 222 and the lower side conductor 224 may be connected to each other.

Accordingly, the embodiment of the leakage sensor 200 capable of detecting: the electrolyte passing through the one side conductor 222 and the electrolyte passing through the lower side conductor 224 may be facilitated at low cost with a simple configuration.

According to an embodiment of the present invention, the conductor 220 may further include an opposite side conductor 226 constituting the electric circuit, the opposite side conductor 226 provided at an opposite side in the first direction of the one side conductor 222 and extending in the vertical direction or extending obliquely leaning toward a direction perpendicular to the vertical direction. At least one of the resistance, current and the voltage of the electric circuit may change when the leaked electrolyte contacts the opposite side conductor 226.

Accordingly, the electrolyte forming droplets at or flowing toward the opposite side in the first direction of the first sealing portion 122 may contact the conductor 220 of the leakage sensor 200. As a result, the leakage sensor 200 may quickly, accurately and reliably detect electrolyte leakage.

According to an embodiment of the present invention, the one side conductor 222 and the opposite side conductor 226 may be connected to the lower side conductor 224.

Accordingly, the embodiment of the leakage sensor 200 capable of detecting: the electrolyte passing through the one side conductor 222; the electrolyte passing through the lower side conductor 224; and the electrolyte passing through the opposite side conductor 226 may be facilitated at low cost with a simple configuration.

In addition, the vertical lengths of the one side conductor 222 and the opposite side conductor 226 may be increased, and the length of the lower side conductor 224 in the first direction may be increased. Thus, for the electrolyte that leaks through the edge of the first sealing portion 122 and then forms droplets or flows downward, the probability of contact with the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

According to an embodiment of the present invention, the conductor 220 may further include a terminal 228 connected to an external object constituting the electric circuit and to the one side conductor 222. The terminal 228 may be provided at an upper side portion of the leakage sensor 200.

Accordingly, the terminal 228 of the conductor 220 connected to an external object (e.g., external power) may not be in contact with the leaked electrolyte flowing downward or forming droplets or accumulated at the lower portion. As a result, it is possible to prevent a short circuit in the electric circuit and to prevent damage to the part connecting the conductor 220 and the external object.

According to an embodiment of the present invention, the terminal 228 is provided above the one side conductor 222.

Accordingly, the connection between the terminal 228 and the external object (e.g., external power) may be established and maintain connection without interfering with the one side conductor 222. As a result, the connection between the leakage sensor 200 and an external object (e.g., external power) may be easily and stably established and maintained.

According to an embodiment of the present invention, the battery cell may further include a first electrode lead 310 connected to the electrode assembly accommodated in the receptor 110 and extending in the first direction and disposed at a one side in the first direction of the electrode assembly. The sealing portion 120 may include a first sealing portion 122 provided at one side in the first direction of the electrode assembly and the receptor 110, the first sealing portion 122 surrounding the first electrode lead 310. The leakage sensor 200 may be coupled to and installed at the first sealing portion 122. The conductor 220 may include a one side conductor 222 constituting the electric circuit, the one side conductor 222 provided adjacent to a one side edge in the first direction of the first sealing portion 122 and extending along the one side edge of the first sealing portion 122. At least one of the resistance, current and the voltage of the electric circuit may change when the leaked electrolyte contacts the one side conductor 222.

Accordingly, since the one side conductor 222 of the leakage sensor 200 is provided at the one side edge in the first direction of the first sealing portion 122 surrounding the first electrode lead 310 where electrolyte leakage occurs relatively easily, the leakage sensor 200 may detect electrolyte leakage quickly, accurately and effectively.

According to an embodiment of the present invention, the leakage sensor 200 may further include a flexible printed circuit board 210 coupled to and installed at the sealing portion 120. The conductor 220 may be a circuit pattern formed on the flexible printed circuit board 210.

Accordingly, the embodiment of the leakage sensor 200 may be facilitated at low cost with a simple configuration. In addition, the weight of the leakage sensor 200 may be reduced. Moreover, the installation of the leakage sensor 200 may be facilitated since the leakage sensor 200 may be bent together with the sealing portion 120.

According to an embodiment of the present invention, the leakage sensor 200 may include a first leakage sensor 200A and a second leakage sensor 200B. The first leakage sensor 200A coupled to and installed on a one side surface of the first sealing portion 122 in a second direction intersecting the vertical direction and the first direction. The second leakage sensor 200B coupled to and installed on an opposite side surface of the first sealing portion 122 in the second direction.

Accordingly, the electrolyte that leaked through the one side edge in the first direction of the first sealing portion 122 may contact the conductor 220 of the first leakage sensor 200A or the second leakage sensor 200B regardless of whether the leaked electrolyte forms droplets at or flows downward to either the one side or the opposite side of the first sealing portion 122 in the second direction. Therefore, the leakage sensor 200 may detect the electrolyte leakage quickly, accurately and reliably.

In addition, since the first leakage sensor 200A and the second leakage sensor 200B are installed on one side surface and opposite side surface of the sealing portion 120 in the second direction, respectively, having an extra empty space in the second direction due to the width in the second direction being smaller than that of the receptor 110, additional space for installing the first leakage sensor 200A and the second leakage sensor 200B may not be necessary.

According to an embodiment of the present invention, a battery cell capable of detecting electrolyte leakage may include an electrode assembly; an electrolyte; a case 100 accommodating the electrode assembly and sealed with the electrode assembly and the electrolyte accommodated therein; and a leakage sensor 200 coupled to and installed at the case 100 to detect the electrolyte leaking from the case 100. The case 100 may extend in vertical direction and first direction intersecting the vertical direction. The leakage sensor 200 may include a conductor 220 constituting an electric circuit, the conductor 220 extending in the vertical direction or extending obliquely leaning toward a direction perpendicular to the vertical direction. At least one of resistance, current and voltage of the electric circuit may change when leaked electrolyte contacts the conductor 220.

Accordingly, the embodiment of the leakage sensor 200 may be facilitated at low cost with a simple configuration. In addition, electrolyte leakage may be detected in real time.

In addition, for the electrolyte leaks from the case 100 and then flows downward, the probability of contact with the conductor 220 of the leakage sensor 200 may increase, and the duration and/or number of times of contact with the conductor 220 of the leakage sensor 200 may increase. As a result, accidents such as fire may be prevented in advance.

According to an embodiment of the present invention, the conductor 220 may include: a first conductor C1 extending in the vertical direction or extending obliquely leaning toward a direction perpendicular to the vertical direction; and a second conductor C2 extending parallel to the first conductor C1 with a predetermined distance therebetween. The first conductor C1 and the second conductor C2 may constitute the electric circuit. At least one of the resistance, the current and the voltage of the electric circuit may change when the leaked electrolyte is simultaneously in contact with the first conductor C1 and the second conductor C2 to electrically connect the first conductor C1 and the second conductor C2.

Accordingly, the embodiment of the leakage sensor 200 capable of detecting the electrolyte leaked from the case 100 and flowing downward may be facilitated at low cost with a simple configuration.

According to an embodiment of the present invention, the leakage sensor 200 may include a first leakage sensor 200A and a second leakage sensor 200B. The first leakage sensor 200A may be coupled to and installed on a one side surface of the case 100 in a second direction intersecting the vertical direction and the first direction. The second leakage sensor 200B may be coupled to and installed on an opposite side surface of the case 100 in the second direction.

Accordingly, the electrolyte leaked from the case may contact the conductor 220 of the first leakage sensor 200A or the second leakage sensor 200B regardless of whether the leaked electrolyte flows downward to either the one side or the other side of the case 100 in the second direction. Therefore, the leakage sensor 200 may detect the electrolyte leakage quickly, accurately and reliably.

According to an embodiment of the present invention, a battery module 1 may include: a plurality of battery cells capable of detecting the electrolyte leakage; and an ICB (Internal Connection Board) module 20 electrically connected to a conductor 220 of a leakage sensor 200 of each of the plurality of battery cells capable of detecting the electrolyte leakage.

Accordingly, a battery module capable of detecting electrolyte leakage of each battery cell may be manufactured simply, easily, and at low cost.

In addition to the advantageous effects described above, specific effects of the present invention will be described further while describing specific details of the present invention.

### [BRIEF DESCRIPTION OF DRAWINGS]

FIGS. 1 to 4 are perspective views, exploded perspective views, front views and back views, respectively, schematically illustrating a battery cell capable of detecting electrolyte leakage according to an embodiment of the present invention.
FIGS. 5 and 6 are enlarged front view and enlarged perspective view illustrating the left portions of the battery cell of FIGS. 1 to 3.
FIG. 7 is a front view illustrating a leakage sensor of the battery cell of FIGS. 1 to 3, FIG. 5 and FIG. 6.
FIGS. 8 to 10 are enlarged views of A, B and C of FIG. 7, respectively.
FIG. 11 is a drawing schematically illustrating a portion of a battery module according to an embodiment of the present invention.

### [DETAILED DESCRIPTION OF THE INVENTION]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of' or "comprises" used herein should not be construed as necessarily including all of the elements or steps described in the specification, and should be construed as not including some of the elements or steps, or including additional elements or steps.

In addition, the expressions in singular form used herein include expressions in plural form unless the context explicitly dictates otherwise. Terms such as "consists of' or "comprises" used herein should not be construed as necessarily including all of the elements or steps described in the specification, and should be construed as not including some of the elements or steps, or including additional elements or steps.

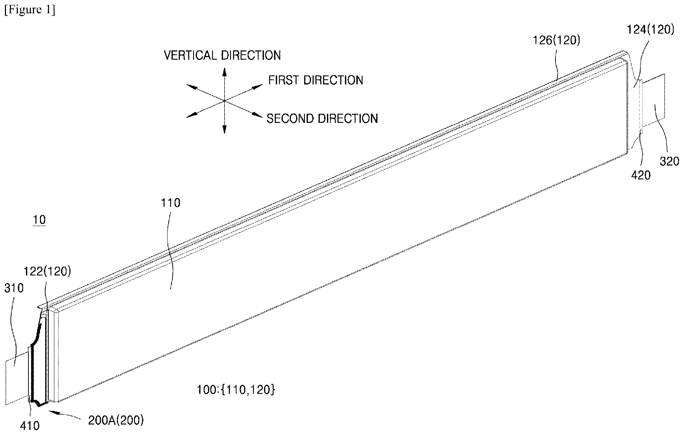

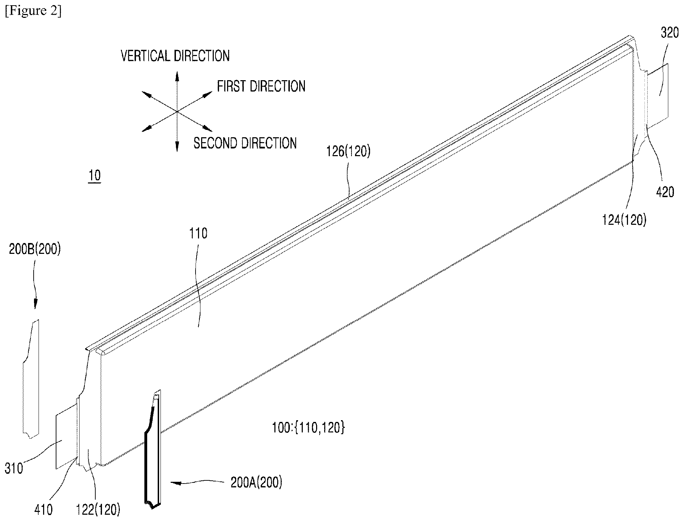

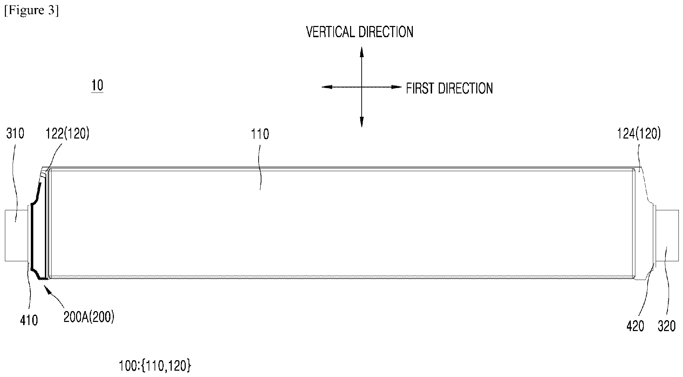

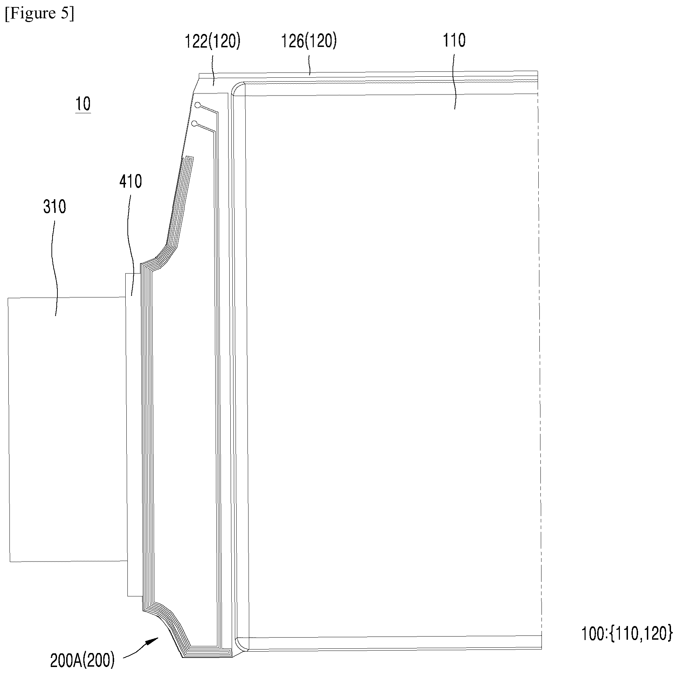

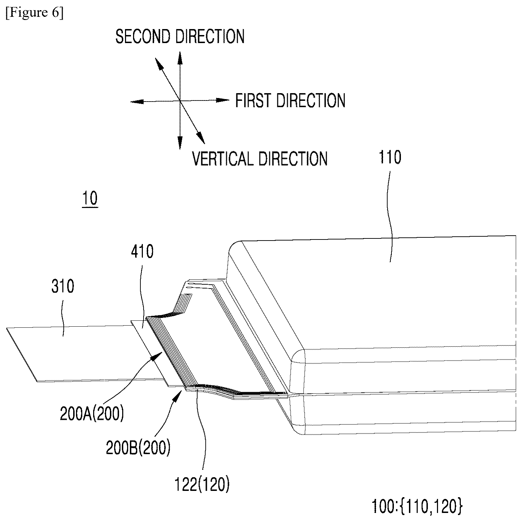

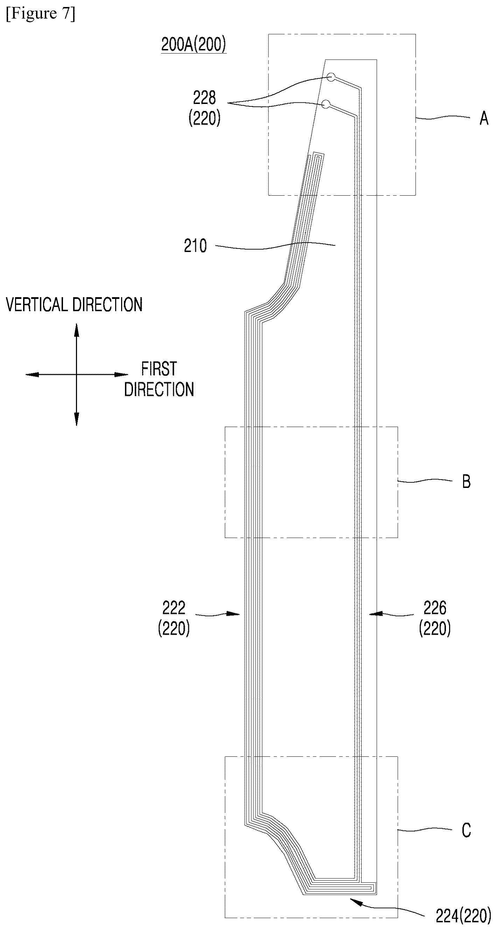

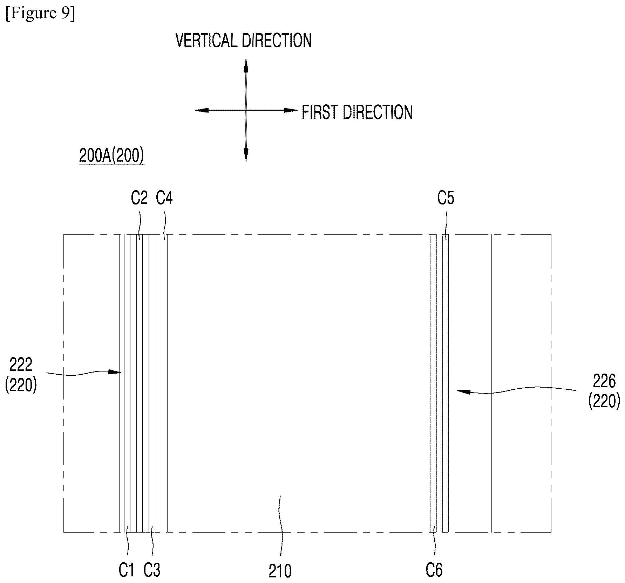

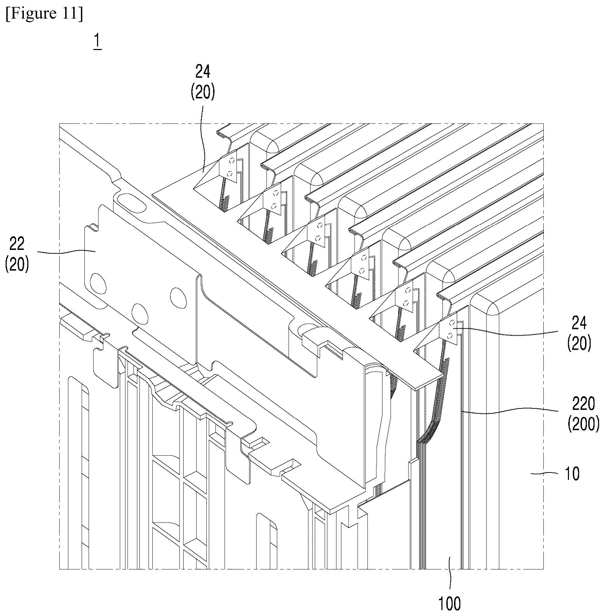

FIGS. 1 to 4 are perspective views, exploded perspective views, front views and back views, respectively, schematically illustrating a battery cell capable of detecting electrolyte leakage according to an embodiment of the present invention, FIGS. 5 and 6 are enlarged front view and enlarged perspective view illustrating the left portions of the battery cell of FIGS. 1 to 3, FIG. 7 is a front view illustrating a leakage sensor of the battery cell of FIGS. 1 to 3, FIG. 5 and FIG. 6, FIGS. 8 to 10 are enlarged views of A, B and C of FIG. 7, respectively, and FIG. 11 is a drawing schematically illustrating a portion of a battery module according to an embodiment of the present invention.

### [FIRST EMBODIMENT OF A BATTERY CELL CAPABLE OF DETECTING LEAKAGE]

Referring to FIGS. 1 to 6, a battery cell 10 capable of detecting leakage according to a first embodiment may include: an electrode assembly (not shown); an electrolyte (not shown); a case 100; and a leakage sensor 200. The battery cell 10 capable of detecting leakage may further include: a first electrode lead 310; and a second electrode lead 320. The battery cell 10 capable of detecting leakage may further include: a first insulating film 410; and a second insulating film 420.

Hereinafter, each element will be described.

### [ELECTRODE ASSEMBLY, ELECTROLYTE AND CASE]

The electrode assembly (not shown) may include an anode, a cathode and a separator interposed therebetween.

The electrolyte (not shown) may be injected into a receptor 110 and the electrode assembly may be impregnated with electrolyte.

The case 100 may include the receptor 110 and a sealing portion 120.

The receptor 110 may accommodate the electrode assembly and the electrolyte.

The receptor 110 may extend in the vertical direction and in the first direction (e.g., left and right directions) intersecting the vertical direction.

The sealing portion 120 may be provided at the edge of the case 100. The sealing portion 120 may seal the receptor 110 with the electrode assembly and electrolyte accommodated therein.

The sealing portion 120 may include a first sealing portion 122. The sealing portion 120 may further include a second sealing portion 124. The sealing portion 120 may further include a third sealing portion 126.

The first sealing portion 122 may be provided at the one side (e.g., left side) of the receptor 110 in the first direction. The first sealing portion 122 may extend in the vertical direction. The first sealing portion 122 may have a predetermined width in the first direction.

The second sealing portion 124 may be provided at the opposite side (e.g., right side) of the receptor 110 in the first direction. The second sealing portion 124 may extend in the vertical direction. The second sealing portion 124 may have a predetermined width in the first direction.

The third sealing portion 126 may be provided at one side (e.g., upper side) of the receptor 110 in the vertical direction. The third sealing portion 126 may extend in the first direction. The third sealing portion 126 may have a predetermined width in the vertical direction. The third sealing portion 126 may be bent.

### [LEAKAGE SENSOR]

The leakage sensor 200 may be coupled to and installed at the sealing portion 120. For example, the leakage sensor 200 may be coupled to and installed at the first sealing portion 122.

Accordingly, since the leakage sensor 200 is coupled to and installed at the sealing portion 120 with extra empty space therearound by being smaller than the receptor 110, additional space for installing the leakage sensor 200 may be unnecessary.

The leakage sensor 200 may detect the electrolyte leaked from the case 100.

A pair of leakage sensors 200 may be provided. That is, a first leakage sensor 200A and a second leakage sensor 200B, each of which is an independent leakage sensor 200, may be provided (FIGS. 1 to 6).

The first leakage sensor 200A may be coupled to and installed on a one side surface (e.g., front surface) of the first sealing portion 122 in the second direction (e.g., front and rear directions) intersecting the vertical direction and the first direction. The second leakage sensor 200B may be coupled to and installed on an opposite side surface (e.g., rear surface) of the first sealing portion 122 in the second direction (FIGS. 1 to 6).

Accordingly, the electrolyte that leaked through the one side edge in the first direction of the first sealing portion 122 may contact the conductor 220 of the first leakage sensor 200A or the second leakage sensor 200B regardless of whether the leaked electrolyte forms droplets at or flows downward to either the one side or the opposite side of the first sealing portion 122 in the second direction. Therefore, the leakage sensor 200 may detect the electrolyte leakage quickly, accurately and reliably.

In addition, since the first leakage sensor 200A and the second leakage sensor 200B are installed on one side surface and opposite side surface of the sealing portion 120 in the second direction, respectively, having an extra empty space in the second direction due to the width in the second direction being smaller than that of the receptor 110, additional space for installing the first leakage sensor 200A and the second leakage sensor 200B may not be necessary.

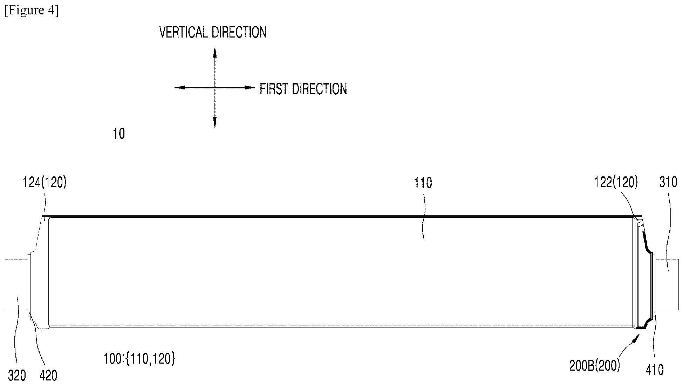

Hereinafter, the leakage sensor 200 will be described in detail by referring to the first leakage sensor 200A of FIGS. 7 to 10. The second leakage sensor 200B may have the characteristics of the leakage sensor 200 described below and may be symmetric in the first direction to the first leakage sensor 200A of FIGS. 7 to 10 (FIG. 4).

Referring further to FIGS. 7 to 10, the leakage sensor 200 may include a conductor 220. The leakage sensor 200 may further include a flexible printed circuit board 210.

The flexible printed circuit board 210 may be coupled to and installed at the sealing portion 120. For example, the flexible printed circuit board 210 may be adhered to the sealing portion 120. The flexible printed circuit board 210 may include an insulating film. The flexible printed circuit board 210 may be composed of a material including PET (Polyethylene terephthalate), PI (Polyimide), or PEN (Polyethylene naphthalate).

The conductor 220 may be a circuit pattern formed on a flexible printed circuit board 210.

Accordingly, the embodiment of the leakage sensor 200 may be facilitated at low cost with a simple configuration. In addition, the weight of the leakage sensor 200 may be reduced. Moreover, the installation of the leakage sensor 200 may be facilitated since the leakage sensor 200 may be bent together with the sealing portion 120.

The conductor 220 may be provided adjacent to and extend along the edge of the sealing portion 120 (FIGS. 1 to 6). For example, among the first conductor C1 to the sixth conductor C6 constituting the conductor 220, the first conductor C1 to the fourth conductor C4 may be provided adjacent to and extend along the edge of the sealing portion 120 (FIGS. 7 to 10).

Accordingly, since the electrolyte mainly leaks through the edge of the sealing portion 120, and the conductor 220 of the leakage sensor 200 is provided adjacent to the edge of the sealing portion 120 and extends along the edge of the sealing portion 120, the leakage sensor 200 may quickly and accurately detect electrolyte leakage. Accordingly, accidents such as fire may be prevented in advance.

The conductor 220 may constitute an electric circuit. When the leaked electrolyte contacts the conductor 220, at least one of the resistance, the current and the voltage of the electric circuit may change.

For example, a weak current may normally flow through the conductor 220 of the electric circuit, and when the leaked electrolyte contacts the conductor 220, the resistance of the electric circuit may decrease. As another example, the conductor 220 may not normally have current flowing, and when the leaked electrolyte contacts the conductor 220, current may flow in the conductor 220.

Accordingly, the embodiment of the leakage sensor 200 may be facilitated at low cost with a simple configuration. In addition, electrolyte leakage may be detected in real time.

The electric circuit constituted by the conductor 220 may be connected to an ICB (Interconnect Circuit Board). When the resistance, etc. of the electric circuit changes, the ICB may detect the same and transmit an electric signal to the BMS (battery management system).

Here, the ICB may refer to a circuit board equipped with at least one element that delivers information between the battery and the BMS. In general, the ICB may be equipped with at least one element that delivers information sensed from the electrode lead of the battery cell such as voltage information to the BMS. The ICB of the present invention may be equipped with an element that delivers information such as a change in resistance of the electric circuit of the leakage sensor 200 to the BMS. The ICB of the present invention may be provided separately from the conventional ICB.

In addition, the BMS may refer to a system that monitors the state of the battery cell such as temperature, voltage and current, and controls the balancing of the battery cell, charging or discharging through SOC (State Of Charge) estimation, etc. based on the monitored state of the battery cell. The BMS of the present invention may take appropriate measures for a battery cell with electrolyte leakage. For example, the BMS may block the charge and discharge of a battery cell with electrolyte leakage.

The conductor 220 may include a first conductor C1 and a second conductor C2. The conductor 220 may further include a third conductor C3. The conductor 220 may further include a fourth conductor C4. The conductor 220 may further include a fifth conductor C5 and a sixth conductor C6.

The first conductor C1 may be provided adjacent to the edge of the sealing portion 120. The first conductor C1 may extend along the edge of the sealing portion 120.

The second conductor C2 may be provided inner than the first conductor C1 on the sealing portion 120. The second conductor C2 may extend parallel to the first conductor C1 spaced apart from the first conductor C1 with a predetermined distance therebetween. The first conductor C1 and the second conductor C2 may constitute the electric circuit.

When the leaked electrolyte simultaneously comes in contact with the first conductor C1 and the second conductor C2 such that the first conductor C1 and the second conductor C2 are electrically connected by the leaked electrolyte, at least one of the resistance, the current and the voltage of the above-described electric circuit may change.

Accordingly, the embodiment of the leakage sensor 200 may be facilitated at low cost with a simple configuration.

The third conductor C3 may be provided inner than the second conductor C2 on the sealing portion 120. The third conductor C3 may extend parallel to the second conductor C2 spaced apart from the second conductor C2 with a predetermined distance therebetween. The third conductor C3 may constitute the electric circuit.

When the leaked electrolyte simultaneously comes in contact with the first conductor C1 and the second conductor C2 or with the second conductor C2 and the third conductor C3 such that the first conductor C1 and the second conductor C2 are electrically connected or the second conductor C2 and the third conductor C3 are electrically connected by the leaked electrolyte, at least one of the resistance, the current and the voltage of the electric circuit may change.

Accordingly, the leakage sensor 200 may increase the leakage detection area or the leakage detection width, or the separation distance between the first conductor C1 and the second conductor C2 or the second conductor C2 and the third conductor C3 may be reduced such that the performance or sensitivity of the leakage sensor 200 may be improved.

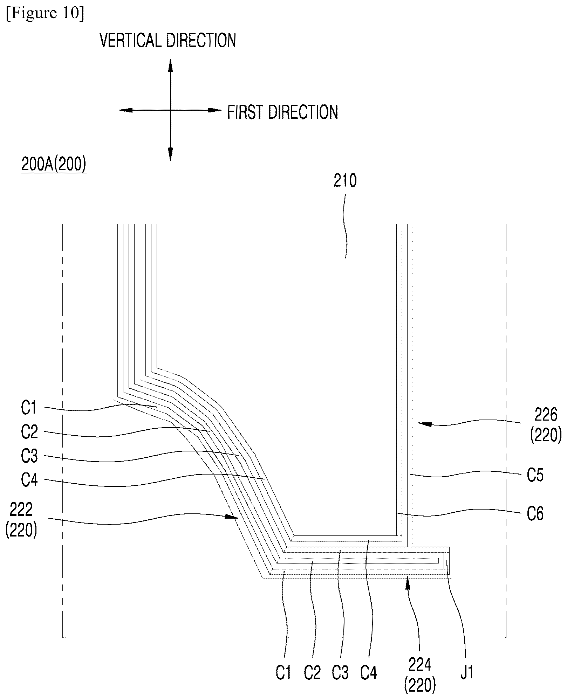

The first conductor C1 and the third conductor C3 may be connected to each other. For example, the ends of the first conductor C1 and the third conductor C3 may be connected by a first connecting conductor J1 (FIG. 10).

Accordingly, the embodiment of the leakage sensor 200 capable of detecting: the electrolyte passing through the first conductor C1 and the second conductor C2; and the electrolyte passing through the second conductor C2 and the third conductor C3 may be facilitated at low cost with a simple configuration.

For example, as long as one of the first conductor C1 and the third conductor C3 is connected to the first electrode (e.g., anode) of the external power and the second conductor C2 is connected to the second electrode (e.g., cathode) of the same external power, the leakage sensor 200 may detect: the electrolyte passing through the first conductor C1 and the second conductor C2 and the electrolyte passing through the second conductor C2 and the third conductor C3. That is, since only one external power is required, the electric circuit may be simplified and the cost and installation space may be reduced. In addition, it is sufficient when only one of the first conductor C1 and the third conductor C3 is directly connected to the terminal 228 of the leakage sensor 200 connected to the external power in order to connect to the first electrode of the single external power. As a result, the electric circuit may be simplified.

The fourth conductor C4 may be provided inner the third conductor C3 on the sealing portion 120. The fourth conductor C4 may extend parallel to the third conductor C3 spaced apart from the third conductor C3 with a predetermined distance therebetween. The fourth conductor C4 may constitute the electric circuit.

When the leaked electrolyte is simultaneously in contact with: the first conductor C1 and the second conductor C2, the second conductor C2 and the third conductor C3; or the third conductor C3 and the fourth conductor C4 such that the first conductor C1 and the second conductor C2 are electrically connected, the second conductor C2 and the third conductor C3 are electrically connected, or the third conductor C3 and the fourth conductor C4 are electrically connected by the leaked electrolyte, at least one of the resistance, the current and the voltage of the electric circuit may change.

Accordingly, the leakage sensor 200 may increase the leakage detection area or the leakage detection width, or the separation distance between the first conductor C1 and the second conductor C2, the second conductor C2 and the third conductor C3 or the third conductor C3 and the fourth conductor C4 may be reduced such that the performance or sensitivity of the leakage sensor 200 may be improved.

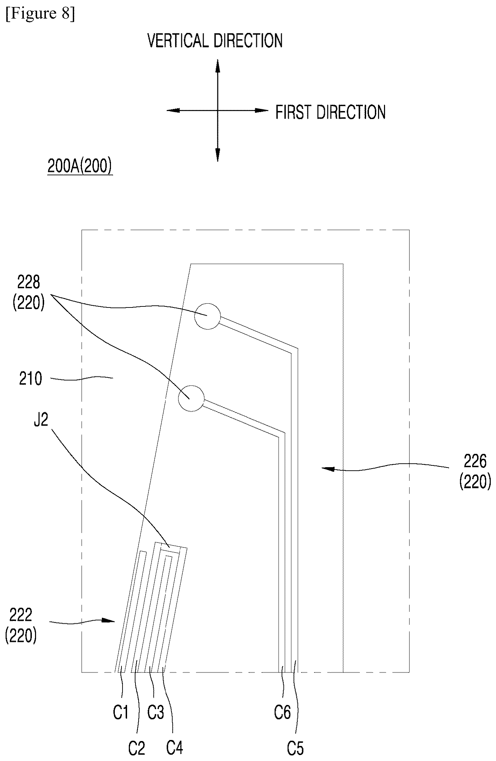

The first conductor C1 and the third conductor C3 may be connected to each other, and the second conductor C2 and the fourth conductor C4 may be connected to each other. For example, the ends of the first conductor C1 and the third conductor C3 may be connected by the first connecting conductor J1 (FIG. 10). In addition, the ends of the second conductor C2 and the fourth conductor C4 may be connected by the second connecting conductor J2 (FIG. 8).

Accordingly, the embodiment of the leakage sensor 200 capable of detecting: the electrolytes passing through the first conductor C1 and the second conductor C2; the electrolytes passing through the second conductor C2 and the third conductor C3; and the electrolytes passing through the third conductor C3 and the fourth conductor C4 may be facilitated at low cost with a simple configuration.

For example, as long as one of the first conductor C1 and the third conductor C3 is connected to the first electrode (e.g., anode) of the external power and one of the second conductor C2 and the fourth conductor C4 is connected to the second electrode (e.g., cathode) of the same external power, the leakage sensor 200 may detect: the electrolyte passing through the first conductor C1 and the second conductor C2; the electrolyte passing through the second conductor C2 and the third conductor C3; and the electrolyte passing through the third conductor C3 and the fourth conductor C4. That is, since only one external power is required, the electric circuit may be simplified and the cost and installation space may be reduced. In addition, it is sufficient when only one of the first conductor C1 and the third conductor C3 is directly connected to the terminal 228 of the leakage sensor 200 connected to the external power in order to connect to the first electrode of the single external power, and only one of the second conductor C2 and the fourth conductor C4 is directly connected to another terminal 228 of the leakage sensor 200 connected to the external power in order to connect to the second electrode of the single external power. As a result, the electric circuit may be simplified.

The fifth conductor C5 and the sixth conductor C6 will be described later.

Meanwhile, as described above, the leakage sensor 200 may be coupled to and installed at the first sealing portion 122. Here, the conductor 220 may include the one side conductor 222. The conductor 220 may further include the lower side conductor 224. The conductor 220 may further include the opposite side conductor 226. The conductor 220 may further include a terminal 228.

The one side conductor 222 may be provided adjacent to the one side edge (e.g., a left side edge) of the first sealing portion 122 in the first direction. The one side conductor 222 may extend in a vertical direction along the one side edge of the first sealing portion 122 or may extend obliquely leaning toward a direction perpendicular to the vertical direction along the one side edge of the first sealing portion 122. The one side conductor 222 may constitute the electric circuit.

When a leaked electrolyte contacts the one side conductor 222, at least one of the resistance, the current and the voltage of the electric circuit may change.

Accordingly, for the electrolyte that leaks through one side edge in the first direction of the first sealing portion 122 and then forms droplets or flows downward, the probability of contact with the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

The one side conductor 222 may include the first conductor C1 and the second conductor C2 described above. The one side conductor 222 may further include the third conductor C3 described above. The one side conductor 222 may further include the fourth conductor C4 described above.

The lower side conductor 224 may be provided adjacent to the lower side edge of the first sealing portion 122. The lower side conductor 224 may extend in the first direction along the lower side edge of the first sealing portion 122 or may extend obliquely leaning toward a direction perpendicular to the first direction along the lower side edge of the first sealing portion 122. The lower side conductor 224 may constitute the electric circuit.

When the leaked electrolyte contacts the lower side conductor 224, at least one of the resistance, the current and the voltage of the electric circuit may change.

Accordingly, for the electrolyte that leaks through the edge of the first sealing portion 122 and then flows downward or, forms droplets or accumulates at the lower side, the probability of contact with the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

The lower side conductor 224 may include the first conductor C1 and the second conductor C2 described above. The lower side conductor 224 may further include the third conductor C3 described above. The lower side conductor 224 may further include the fourth conductor C4 described above.

The lower side conductor 224 may be extended to a position corresponding to an opposite side edge portion of the first sealing portion 122 in the first direction.

Accordingly, since the leakage detection area of the leakage sensor 200 may be increased, the performance or sensitivity of the leakage sensor 200 may be improved.

The one side conductor 222 and the lower side conductor 224 may be connected to each other. For example, the first conductor C1 to the fourth conductor C4 included in the one side conductor 222 may be connected to the first conductor C1 to the fourth conductor C4 included in the lower side conductor 224 (FIG. 10).

Accordingly, the embodiment of the leakage sensor 200 capable of detecting: the electrolyte passing through the one side conductor 222 and the electrolyte passing through the lower side conductor 224 may be facilitated at low cost with a simple configuration.

For example, as long as one of the one side conductor 222 and the lower side conductor 224 is connected to the external power, the leakage sensor 200 may detect: the electrolyte passing through the one side conductor 222; and the electrolyte passing through the lower side conductor 224. That is, since only one external power is required, the electric circuit may be simplified and the cost and installation space may be reduced. In addition, it is sufficient when only one of the one side conductor 222 and the lower side conductor 224 is directly connected to the terminal 228 of the leakage sensor 200 connected to the external power in order to connect to the single external power. As a result, the electric circuit may be simplified.

The opposite side conductor 226 may be provided at an opposite side (e.g., right side) of the one side conductor 222 in the first direction. The opposite side conductor 226 may extend in the vertical direction or may extend obliquely leaning toward a direction perpendicular to the vertical direction. The opposite side conductor 226 may constitute the electric circuit.

When the leaked electrolyte contacts the opposite side conductor 226, at least one of the resistance, the current and the voltage of the electric circuit may change.

Accordingly, the electrolyte forming droplets at or flowing toward the opposite side in the first direction of the first sealing portion 122 may contact the conductor 220 of the leakage sensor 200. As a result, the leakage sensor 200 may quickly, accurately and reliably detect electrolyte leakage.

The opposite side conductor 226 may include a fifth conductor C5 and a sixth conductor C6.

The fifth conductor C5 may be provided at the second end (e.g., right edge) of the first sealing portion 122 in the first direction. The fifth conductor C5 may extend in the vertical direction or may extend obliquely leaning toward a direction perpendicular to the vertical direction.

The sixth conductor C6 may extend parallel to the fifth conductor C5 spaced apart from the fifth conductor C5 with a predetermined distance therebetween. The fifth conductor C5 and the sixth conductor C6 may constitute the electric circuit.

When the leaked electrolyte is simultaneously in contact with the fifth conductor C5 and the sixth conductor C6 such that the fifth conductor C5 and the sixth conductor C6 are electrically connected by the leaked electrolyte, at least one of the resistance, the current and the voltage of the electric circuit may change.

The one side conductor 222 and the opposite side conductor 226 may be connected to the lower side conductor 224. For example, the first conductor C1 to the fourth conductor C4 included in the one side conductor 222 may be connected to the first conductor C1 to the fourth conductor C4 included in the lower side conductor 224, respectively (FIG. 10). In addition, the third conductor C3 and the fourth conductor C4 included in the lower side conductor 224 may be connected to the fifth conductor C5 and the sixth conductor C6 included in the opposite side conductor 226, respectively (FIG. 10).

Accordingly, the embodiment of the leakage sensor 200 capable of detecting: the electrolyte passing through the one side conductor 222; the electrolyte passing through the lower side conductor 224; and the electrolyte passing through the opposite side conductor 226 may be facilitated at low cost with a simple configuration.

For example, as long as one of the one side conductor 222, the lower side conductor 224 and the opposite side conductor 226 is connected to the external power, the leakage sensor 200 may detect: the electrolyte passing through the one side conductor 222; the electrolyte passing through the lower side conductor 224; and the electrolyte passing through the opposite side conductor 226. That is, since only one external power is required, the electric circuit may be simplified and the cost and installation space may be reduced. In addition, it is sufficient when only one of the one side conductor 222, the lower side conductor 224 and the opposite side conductor 226 is directly connected to the terminal 228 of the leakage sensor 200 connected to the external power in order to connect to the single external power. As a result, the electric circuit may be simplified.

In addition, the vertical lengths of the one side conductor 222 and the opposite side conductor 226 may be increased, and the length of the lower side conductor 224 in the first direction may be increased. Thus, for the electrolyte that leaks through the edge of the first sealing portion 122 and then forms droplets or flows downward, the probability of contact the conductor 220 of the leakage sensor 200 may increase, and the duration and/or number of times of contact with the conductor 220 of the leakage sensor 200 may increase. As a result, the leakage sensor 200 may quickly, accurately and reliably detect electrolyte leakage.

The terminal 228 may constitute the electric circuit. The terminal 228 may be connected to an external object (e.g., external power or external wire). The terminal 228 may be connected to the one side conductor 222.

The terminal 228 may be provided at an upper side portion of the leakage sensor 200.

Accordingly, the terminal 228 of the conductor 220 connected to an external object (e.g., external power) may not be in contact with the leaked electrolyte flowing downward or forming droplets or accumulated at the lower portion. As a result, it is possible to prevent a short circuit in the electric circuit and to prevent damage to the part connecting the conductor 220 and the external object.

The terminal 228 may be provided above the one side conductor 222.

Accordingly, the connection between the terminal 228 and the external object (e.g., external power) may be established and maintain connection without interfering with the one side conductor 222. As a result, the connection between the leakage sensor 200 and an external object (e.g., external power) may be easily and stably established and maintained.

### [FIRST ELECTRODE LEAD 310 AND SECOND ELECTRODE LEAD 320]

The first electrode lead 310 may be provided at a one side of the electrode assembly in the first direction accommodated in the receptor 110 and extending in the first direction. The first electrode lead 310 may be connected to the electrode assembly. Here, as described above, the leakage sensor 200 may be coupled to and installed at the first sealing portion 122 and may include the one side conductor 222.

Accordingly, since the one side conductor 222 of the leakage sensor 200 is provided at the one side edge in the first direction of the first sealing portion 122 surrounding the first electrode lead 310 where electrolyte leakage occurs relatively easily, the leakage sensor 200 may detect electrolyte leakage quickly, accurately and effectively.

The first electrode lead 310 may face the leakage sensor 200 in the second direction with the first sealing portion 122 therebetween. It is preferable that the insulation clearance distance and the insulation creepage distance between the first electrode lead 310 and the conductor 220 of the leakage sensor 200 are 0.8 mm or more and 1.0 mm or more, respectively. These numbers are based on the case where the voltage of the electrode assembly of the battery cell 10 is about 3.5V. When the voltage changes, the insulation clearance distance or the insulation creepage distance may change.

The second electrode lead 320 may be provided at an opposite side of the electrode assembly in the first direction. The second electrode lead 320 may be connected to the electrode assembly.

### [FIRST INSULATING FILM 410 AND SECOND INSULATING FILM 420]

A first insulating film 410 may be interposed between the first electrode lead 310 and the first sealing portion 122. The first insulating film 410 may improve the sealing between the first electrode lead 310 and the first sealing portion 122.

The first insulating film 410 may improve the insulating property between the first electrode lead 310 and the metal layer of the case 100. In addition, the first insulating film 410 may improve the insulating property between the first electrode lead 310 and the conductor 220 of the leakage sensor 200. Specifically, the first insulating film 410 may increase the insulation clearance distance and the insulation creepage distance between the first electrode lead 310 and the conductor 220 of the leakage sensor 200.

The second insulating film 420 may be interposed between the second electrode lead 320 and the second sealing portion 124. The second insulating film 420 may improve the sealing property between the second electrode lead 320 and the second sealing portion 124.

### [SECOND EMBODIMENT OF BATTERY CELL CAPABLE OF DETECTING ELECTROLYTE LEAKAGE]

The battery cell capable of detecting electrolyte leakage according to the second embodiment may include an electrode assembly (not shown), an electrolyte (not shown), a case 100 and a leakage sensor 200 as described above. Hereinafter, the characteristics of the battery cell capable of detecting electrolyte leakage according to the second embodiment will be described.

The case 100 may be extended in the vertical direction and the first direction.

The leakage sensor 200 may be coupled to and installed at the case 100. That is, the leakage sensor 200 may not be coupled to and installed at the sealing portion 120 of the case 100. For example, the leakage sensor 200 may be coupled to and installed at the receptor 110.

The conductor 220 of the leakage sensor 200 may extend in the vertical direction or may extend obliquely leaning toward a direction perpendicular to the vertical direction. That is, the conductor 220 of the leakage sensor 200 may not be provided adjacent to the edge of the sealing portion 120 and may not extend along the edge of the sealing portion 120.

The conductor 220 of the leakage sensor 200 may constitute an electric circuit. When the leaked electrolyte contacts the conductor 220, at least one of the resistance, the current and the voltage of the electric circuit may change.

Accordingly, the embodiment of the leakage sensor 200 may be facilitated at low cost with a simple configuration. In addition, electrolyte leakage may be detected in real time.

In addition, for the electrolyte leaks from the case 100 and then flows downward, the probability of contact with the conductor 220 of the leakage sensor 200 may increase, and the duration and/or number of times of contact with the conductor 220 of the leakage sensor 200 may increase. As a result, accidents such as fire may be prevented in advance.

The conductor 220 may include a first conductor C1 and a second conductor C2.

The first conductor C1 may extend in the vertical direction or may extend obliquely leaning toward a direction perpendicular to the vertical direction.

The second conductor C2 may extend parallel to the first conductor C1 spaced apart from the first conductor C1 with a predetermined distance therebetween.

The first conductor C1 and the second conductor C2 may constitute the electric circuit.

When the leaked electrolyte simultaneously comes in contact with the first conductor C1 and the second conductor C2 such that the first conductor C1 and the second conductor C2 are electrically connected by the leaked electrolyte, at least one of the resistance, the current and the voltage of the above-described electric circuit may change.

Accordingly, the embodiment of the leakage sensor 200 capable of detecting the electrolyte leaked from the case 100 and flowing downward may be facilitated at low cost with a simple configuration.

The conductor 220 may further include a third conductor C3.

The third conductor C3 may be spaced apart from the second conductor C2 with a predetermined distance therebetween and extend parallel to the second conductor C2. The second conductor C2 may be provided between the third conductor C3 and the first conductor C1. The third conductor C3 may constitute the electric circuit.

When the leaked electrolyte simultaneously comes in contact with the first conductor C1 and the second conductor C2 or with the second conductor C2 and the third conductor C3 such that the first conductor C1 and the second conductor C2 are electrically connected or the second conductor C2 and the third conductor C3 are electrically connected by the leaked electrolyte, at least one of the resistance, the current and the voltage of the electric circuit may change.

The first conductor C1 and the third conductor C3 may be connected to each other.

The conductor 220 may further include a fourth conductor C4.

The fourth conductor C4 may be spaced apart from the third conductor C3 with a predetermined distance therebetween and extend parallel to the third conductor C3. The third conductor C3 may be provided between the fourth conductor C4 and the second conductor C2. The fourth conductor C4 may constitute the electric circuit.

When the leaked electrolyte is simultaneously in contact with: the first conductor C1 and the second conductor C2, the second conductor C2 and the third conductor C3; or the third conductor C3 and the fourth conductor C4 such that the first conductor C1 and the second conductor C2 are electrically connected, the second conductor C2 and the third conductor C3 are electrically connected, or the third conductor C3 and the fourth conductor C4 are electrically connected by the leaked electrolyte, at least one of the resistance, the current and the voltage of the electric circuit may change.

The first conductor C1 and the third conductor C3 may be connected to each other, and the second conductor C2 and the fourth conductor C4 may be connected to each other.

A pair of leakage sensor 200 may be provided. That is, a first leakage sensor 200A and a second leakage sensor 200B, each of which is a leakage sensor 200, may be provided. The first leakage sensor 200A may be coupled to and installed on a one side surface of the case 100 in the second direction. The second leakage sensor 200B may be coupled to and installed on an opposite side surface of the case 100 in the second direction.

Accordingly, the electrolyte leaked from the case may contact the conductor 220 of the first leakage sensor 200A or the second leakage sensor 200B regardless of whether the leaked electrolyte flows downward to either the one side or the opposite side of the case 100 in the second direction. Therefore, the leakage sensor 200 may detect the electrolyte leakage quickly, accurately and reliably.

Descriptions not given in relation to the battery cell capable of detecting electrolyte leakage according to the second embodiment may be inferred from the battery cell capable of detecting electrolyte leakage according to the first embodiment described above.

### [BATTERY MODULE]

Referring to FIG. 11 further, the battery module according to an embodiment of the present invention may include a battery cell (hereinafter, battery cell) capable of detecting a plurality of electrolyte leakages and an ICB (Internal Connection Board) module 20.

The battery cell is a battery cell capable of detecting electrolyte leakage according to the first or second embodiment described above.

The ICB module 20 may include an ICB 22 and a connecting part 24.

As described above, the ICB 22 may detect changes in the resistance of the electric circuit of the leakage sensor 200 of each battery cell. The ICB 22 may transmit an electrical signal to the BMS (battery management system) when the resistance of the electric circuit changes. The ICB 22 may be a FPC (Flexible Printed Circuit).

The connecting part 24 may electrically connect the ICB 22 and the conductor 220 of the leakage sensor 200 of each battery cell. The connecting part 24 may be connected to the terminal 228 of the leakage sensor 200 of each battery cell. The connecting part 24 may be an FPC formed integrally with the ICB 22 (FIG. 11). However, unlike FIG. 11, the connecting part 24 may be a wire instead of an FPC. The connecting part 24 may be bent and connected to the conductor 220 of the leakage sensor 200 of each battery cell (FIG. 11). The connecting part 24 may be electrically connected to the conductor 220 of the leakage sensor 200 of each battery cell by ACF bonding, riveting, welding, or other methods.

Accordingly, a battery module capable of detecting electrolyte leakage of each battery cell may be manufactured simply, easily, and at low cost.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

### [DESCRIPTION OF REFERENCE NUMERALS]

| | | | |
|---|---|---|---|
| 1: | battery module | | |
| 10: | battery cell capable of detecting electrolyte leakage | | |
| 100: | case | | |
| 110: | receptor | 120: | sealing portion |
| 122: | first sealing portion | 124: | second sealing portion |
| 126: | third sealing portion | | |
| 200: | leakage sensor | | |
| 200A: | first leakage sensor | 200B: | second leakage sensor |
| 210: | flexible printed circuit | 220: | conductor board |
| 222: | one side conductor | 224: | lower side conductor |
| 226: | opposite side conductor | 228: | terminal |
| C1: | first conductor | C2: | second conductor |
| C3: | third conductor | C4: | fourth conductor |
| C5: | fifth conductor | C6: | sixth conductor |
| 310: | first electrode lead | 320: | second electrode lead |
| 410: | first insulating film | 420: | second insulating film |
| 20: | ICB module | | |
| 22: | ICB | 24: | connecting part |

## Claims

1. A battery cell capable of detecting electrolyte leakage, comprising:
an electrode assembly;
an electrolyte;
a case 100 comprising a receptor 110 accommodating the electrode assembly and the electrolyte, and a sealing portion 120 provided at an edge of the case 100 and sealing the receptor 110 with the electrode assembly and the electrolyte accommodated therein; and
a leakage sensor 200 coupled to and installed at the sealing portion 120 to detect the electrolyte leaking from the case 100,
wherein the leakage sensor 200 comprises a conductor 220 constituting an electric circuit, at least a portion of the conductor 220 provided adjacent to and extending along an edge of the sealing portion 120, and
at least one of resistance, current and voltage of the electric circuit changes when leaked electrolyte contacts the conductor 220.

2. The battery cell of claim 1, wherein the conductor 220 comprises: a first conductor C1 provided adjacent to and extending along the edge of the sealing portion 120; and a second conductor C2 provided inner than the first conductor C1 on the sealing portion 120 and extending parallel to the first conductor C1 with a predetermined distance therebetween, wherein the first conductor C1 and the second conductor C2 constituting the electric circuit, and
at least one of the resistance, the current and the voltage of the electric circuit changes when the leaked electrolyte is simultaneously in contact with the first conductor C1 and the second conductor C2 to electrically connect the first conductor C1 and the second conductor C2.

3. The battery cell of claim 2, wherein the conductor 220 further comprises a third conductor C3 provided inner than the second conductor C2 on the sealing portion 120 and extending parallel to the second conductor C2 with a predetermined distance therebetween, the third conductor C3 constituting the electric circuit, and
at least one of the resistance, the current and the voltage of the electric circuit changes when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3.

4. The battery cell of claim 3, wherein the first conductor C1 and the third conductor C3 are connected to each other.

5. The battery cell of any one of claims 3 and 4, wherein the conductor 220 further comprises a fourth conductor C4 provided inner than the third conductor C3 on the sealing portion 120 and extending parallel to the third conductor C3 with a predetermined distance therebetween, the fourth conductor C4 constituting the electric circuit, and
at least one of the resistance, the current and the voltage of the electric circuit changes when the leaked electrolyte is: simultaneously in contact with the first conductor C1 and the second conductor C2 to electrically connect the first conductor C1 and the second conductor C2; or simultaneously in contact with the second conductor C2 and the third conductor C3 to electrically connect the second conductor C2 and the third conductor C3; or simultaneously in contact with the third conductor C3 and the fourth conductor C4 to electrically connect the third conductor C3 and the fourth conductor C4.

6. The battery cell of claim 5, wherein the first conductor C1 and the third conductor C3 are connected to each other, and
the second conductor C2 and the fourth conductor C4 are connected to each other.

7. The battery cell of any one of claims 1 to 6, wherein the receptor 110 extends in a vertical direction and a first direction intersecting the vertical direction,
the sealing portion 120 comprises a first sealing portion 122 having a predetermined width in the first direction, the first sealing portion 122 provided at a one side in the first direction of the receptor 110 and extending in the vertical direction,
the leakage sensor 200 is coupled to and installed at the first sealing portion 122,
the conductor 220 comprises a one side conductor 222 constituting the electric circuit, the one side conductor 222 provided adjacent to a one side edge in the first direction of the first sealing portion 122 and extending in the vertical direction along the one side edge, or extending obliquely leaning toward a direction perpendicular to the vertical direction along the one side edge, and
at least one of the resistance, the current and the voltage of the electric circuit changes when the leaked electrolyte contacts the one side conductor 222,

8. The battery cell of claim 7, wherein the conductor 220 comprises a lower side conductor 224 constituting the electric circuit, the lower side conductor 224 provided adjacent to a lower side edge of the first sealing portion 122 and extending in the first direction along the lower side edge or extending obliquely leaning toward a direction perpendicular to the first direction along the lower side edge, and
at least one of the resistance, the current and the voltage of the electric circuit changes when the leaked electrolyte contacts the lower side conductor 224.

9. The battery cell of claim 8, wherein the lower side conductor 224 extends to a position corresponding to an opposite side end portion in the first direction of the first sealing portion 122.

10. The battery cell of any one of claims 8 and 9, wherein the one side conductor 222 and the lower side conductor 224 are connected to each other.

11. The battery cell of any one of claims 8 to 10, wherein the conductor 220 further comprises an opposite side conductor 226 constituting the electric circuit, the opposite side conductor 226 provided at an opposite side in the first direction of the one side conductor 222 and extending in the vertical direction or extending obliquely leaning toward a direction perpendicular to the vertical direction, and
at least one of the resistance, current and the voltage of the electric circuit changes when the leaked electrolyte contacts the opposite side conductor 226.

12. The battery cell of claim 11, wherein the one side conductor 222 and the opposite side conductor 226 are connected to the lower side conductor 224.

13. The battery cell of any one of claims 7 to 12, wherein the conductor 220 further comprises a terminal 228 connected to an external object constituting the electric circuit and to the one side conductor 222, and
the terminal 228 is provided at an upper side portion of the leakage sensor 200.

14. The battery cell of claim 13, wherein the terminal 228 is provided above the one side conductor 222.

15. The battery cell of any one of claims 1 to 6, further comprising a first electrode lead 310 connected to the electrode assembly accommodated in the receptor 110 and extending in a first direction and disposed at a one side in the first direction of the electrode assembly,
wherein the sealing portion 120 comprises a first sealing portion 122 provided at one side in the first direction of the electrode assembly and the receptor 110, the first sealing portion 122 surrounding the first electrode lead 310,
the leakage sensor 200 is coupled to and installed at the first sealing portion 122,
the conductor 220 comprises a one side conductor 222 constituting the electric circuit, the one side conductor 222 provided adjacent to a one side edge in the first direction of the first sealing portion 122 and extending along the one side edge of the first sealing portion 122, and
at least one of the resistance, current and the voltage of the electric circuit changes when the leaked electrolyte contacts the one side conductor 222.

16. The battery cell of any one of claims 1 to 15, wherein the leakage sensor 200 further includes a flexible printed circuit board 210 coupled to and installed at the sealing portion 120, and
the conductor 220 is a circuit pattern formed on the flexible printed circuit board 210.

17. The battery cell of any one of claims 7 to 14, wherein the leakage sensor 200 comprises a first leakage sensor 200A and a second leakage sensor 200B,
the first leakage sensor 200A coupled to and installed on a one side surface of the first sealing portion 122 in a second direction intersecting the vertical direction and the first direction, and
the second leakage sensor 200B coupled to and installed on an opposite side surface of the first sealing portion 122 in the second direction.

18. A battery cell capable of detecting electrolyte leakage, comprising:
an electrode assembly;
an electrolyte;
a case 100 accommodating the electrode assembly and the electrolyte and sealed with the electrode assembly and the electrolyte accommodated therein, the case 100 extending in vertical direction and first direction intersecting the vertical direction; and
a leakage sensor 200 coupled to and installed at the case 100 to detect the electrolyte leaking from the case 100,
wherein the leakage sensor 200 comprises a conductor 220 constituting an electric circuit, the conductor 220 extending in the vertical direction or extending obliquely leaning toward a direction perpendicular to the vertical direction, and
at least one of resistance, current and voltage of the electric circuit changes when leaked electrolyte contacts the conductor 220.

19. The battery cell of claim 18, wherein the conductor 220 comprises: a first conductor C1 extending in the vertical direction or extending obliquely leaning toward the direction perpendicular to the vertical direction; and a second conductor C2 extending parallel to the first conductor C1 with a predetermined distance therebetween, the first conductor C1 and the second conductor C2 constituting the electric circuit, and
at least one of the resistance, the current and the voltage of the electric circuit changes when the leaked electrolyte is simultaneously in contact with the first conductor C1 and the second conductor C2 to electrically connect the first conductor C1 and the second conductor C2.

20. A battery module comprising a battery cell capable of detecting an electrolyte leakage of any one of claims 1 to 19, comprising:
a plurality of battery cells capable of detecting the electrolyte leakage; and
an ICB (Internal Connection Board) module 20 electrically connected to a conductor 220 of a leakage sensor 200 of each of the plurality of battery cells capable of detecting the electrolyte leakage.
